# EUROPEAN PATENT SPECIFICATION

(11) **EP 2 136 105 B1**
(45) Date of publication and mention of the grant of the patent: **28.12.2011**
(21) Application number: 09162090.6
(22) Date of filing: 05.06.2009
(51) Int. Cl.: F16H 25/22

(54) **A ball screw spindle comprising a metallic deflector member**
Kugelgewindespindel mit metallischem Deflektor
Vis d'entraînement à billes comportant un insert de recirculation de billes métallique

(30) Priority: 20.06.2008 JP 2008161445
(43) Date of publication of application: 23.12.2009
(73) Proprietor: NTN Corporation, Osaka-shi, Osaka (JP)
(72) Inventor: Kazuno, Keisuke c/o NTN Corporation, Iwata-shi, Shizuoka (JP)
(74) Representative: Cohausz & Florack

(56) References cited:
- EP-A- 1 193 422
- EP-A- 1 584 542
- EP-A- 1 703 171
- DE-A1-102006 055 300
- FR-A- 2 703 122
- JP-A- 2007 146 915

## Description

### Field of the Invention

The present invention relates to a ball screw used for various kinds of machine tools such as an electric discharge machine and a tapping center or an electric-powered steering or actuator, and more particularly to a bridge type ball screw using a bridge member for circulating balls.

### Description of Background Art

The ball screw comprises a screw shaft formed with a helical ball rolling screw groove on its outer circumference, a nut adapted to be fitted on the screw shaft and formed with a helical ball rolling screw groove on its inner circumference, a large number of balls contained in a ball rolling passage formed by oppositely arranged screw grooves, and a ball circulating mechanism for bypassing the rolling passage to a radially outward circumferential passage, and used as a motion converting mechanism e.g. for converting a rotational motion of the nut to a linear motion of the screw shaft.

In general, there are several kinds of ball screws having different ball circulating mechanism and one of which is a bridge type. In this bridge type ball screw, the nut is fitted with a bridge member having a connecting passage for bypassing a rolling passage of balls radially outward to form a continuous circulation passage of balls. This bridge type ball screw is advantageous in its relatively simple and compact structure.

As disclosed in the Patent Document JP 2007 146915 A which shows the preamble of claim 1, in the bridge type ball screw of the prior art using such a bridge member, the substantially circular bridge window is formed in a nut and the bridge member is fitted in the bridge window. The bridge member is made of sintered alloy formed by MIM (Metal Injection Molding) as having a substantially cylindrical configuration corresponding to the circular configuration of the bridge window and two arm portions projected from radially inward portions and arranged so that they are engaged with the screw grooves of the nut to position the bridge member relative to the nut.
In addition a pair of guiding walls are formed oppositely each other on outer circumference of the bridge member standing radially outward therefrom and the bridge member is secured to the nut by caulked portions formed by plastically deforming the guiding walls onto a edge portion of the bridge window.

### Disclosure of the Invention

### Problems to be solved by the Invention

In the bridge member of the prior art, it is secured to the nut by abutment portions between the arm portions of the bridge member and screw grooves of the nut and by abutment portions between caulked portions of the bridge member and the edge portion of the bridge window of the nut.
For example a ball screw used in the variable lift valve system of an automobile is suffered from heavy repeating vibrations or alternative loads. Thus the bridge member should be secured by a sufficient strength to assure the operation of the ball screw and is required to have a sufficiently strong abrasion resistance.
In order to sufficiently assure the securing strength of the bridge member, it is important to limit as small as possible the motion of the bridge member in the bridge window caused by a force generated by balls while the balls pass through the ball circulating groove of the bridge member. In this case a clearance, which is determined by a difference in dimensions of the outer diameter of the bridge member and the inner diameter of the bridge window, is very important. However this is not disclosed at all in the Patent Document 1. Inventors of the present invention have found that rattle (or loose) of the bridge member is drastically increased when the clearance between the bridge member and the bridge window exceeds a predetermined value.

It is, therefore, an object of the present invention to provide a bridge type ball screw which can increase the securing strength of the bridge member to the bridge window with limiting the motion of the bridge member in the bridge window by limiting below a predetermined value the clearance determined by a difference in dimensions of the outer diameter of the bridge member and the inner diameter of the bridge window.

### Means for achieving the object

For achieving the object of the present invention there is provided, according to the present invention of claim 1, a bridge type ball screw comprising a screw shaft formed on its outer circumference with a helical screw groove, a nut formed on its inner circumference with a helical screw groove and adapted to be fitted on the screw shaft, a plurality of balls contained in a ball rolling passage formed by the opposite screw grooves, and a metallic bridge member formed with a connecting groove for connecting adjacent portions of the ball rolling passage to make the rolling passage a ball circulating passage and fitted in a bridge window formed in a barrel of the nut characterized in that a clearance between the bridge member and the bridge window is set as 0 mm≤S≤0.1 mm.

This enables to prevent the increase of rattle of the bridge member.

It is preferable as defined in claim 2 that the bridge window and the bridge member are formed as having a substantially circular configuration. This makes it possible to reduce manufacturing steps of the bridge window and accordingly the manufacturing cost as well as to easily and accurately position the bridge member relative to the nut in the axial direction and accordingly to improve the reliability of the ball screw.
It is also preferable as defined in claim 3 that the bridge member is formed of MIM or sintered material. This makes it possible to easily form the bridge member of metal having a complicated configuration.

It is preferable as defined in claim 4 that at least the caulking portion of the bridge member has the hardness of 15-30 HRC. This enables to obtain both ability of caulking and wear resistance.

It is also preferable as defined in claim 5 that whole the bridge member has the hardness of 15-30 HRC. This enables to reduce manufacturing cost of the bridge member by dipping quenching.

It is preferable as defined in claim 6 that the bridge member is formed with a pair of arms adapted to be engaged with the screw groove of the nut. This enables to prevent rotation of the bridge member.
In addition it is preferable as defined in claim 7 that the caulking portions are formed on the diametrically outer ends of the bridge member and adapted to be engaged with an open edge of the bridge window. This makes it possible to keep the securing strength of the caulked portions for a long term.

### Effects of the Invention

According to the bridge type ball screw of the present invention, since it comprises a screw shaft formed on its outer circumference with a helical screw groove, a nut formed on its inner circumference with a helical screw groove and adapted to be fitted on the screw shaft, a plurality of balls contained in a ball rolling passage formed by the opposite screw grooves, and a metallic bridge member formed with a connecting groove for connecting adjacent portions of the ball rolling passage to make the rolling passage a ball circulating passage and fitted in a bridge window formed in a barrel of the nut and is characterized in that a clearance between the bridge member and the bridge window is set as 0 mm≤C≤0.1 mm, it is possible to increase the securing strength of the bridge member to the bridge window with limiting the motion of the bridge member in the bridge window by limiting below a predetermined value the clearance determined by a difference in dimensions of the outer diameter of the bridge member and the inner diameter of the bridge window.

### Best mode for carrying out the Invention

Best mode for carrying out the present invention is a bridge type ball screw comprising a screw shaft formed on its outer circumference with a helical screw groove, a nut formed on its inner circumference with a helical screw groove and adapted to be fitted on the screw shaft, a plurality of balls contained in a ball rolling passage formed by the opposite screw grooves, and a metallic bridge member formed with a connecting groove for connecting adjacent portions of the ball rolling passage to make the rolling passage a ball circulating passage and fitted in a bridge window formed in a barrel of the nut characterized in that a clearance between the bridge member and the bridge window is set as 0 mm≤C≤0.1 mm.

### Embodiment

One preferred embodiment of the present invention will be described with reference to accompanying drawings.

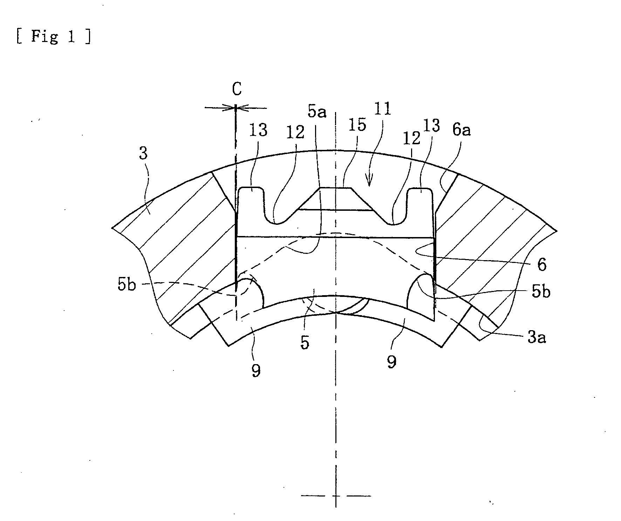

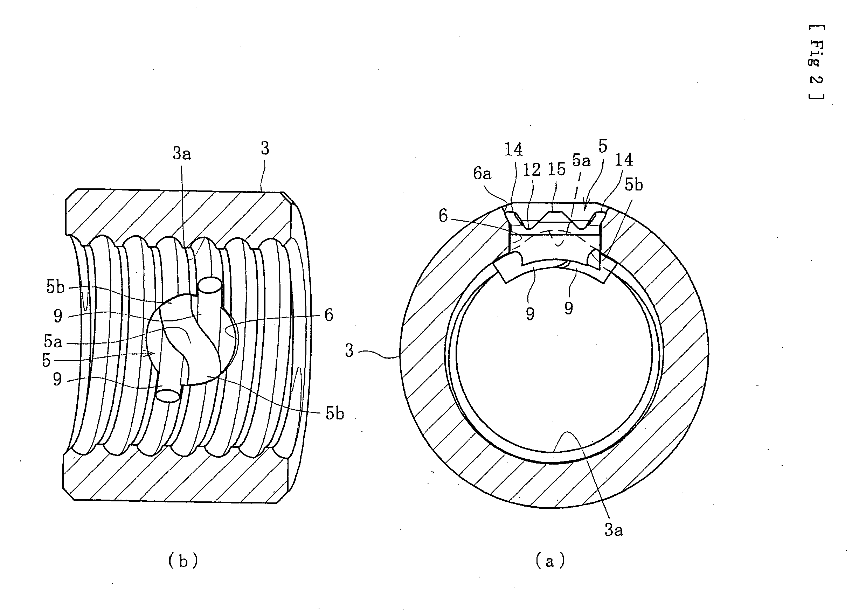

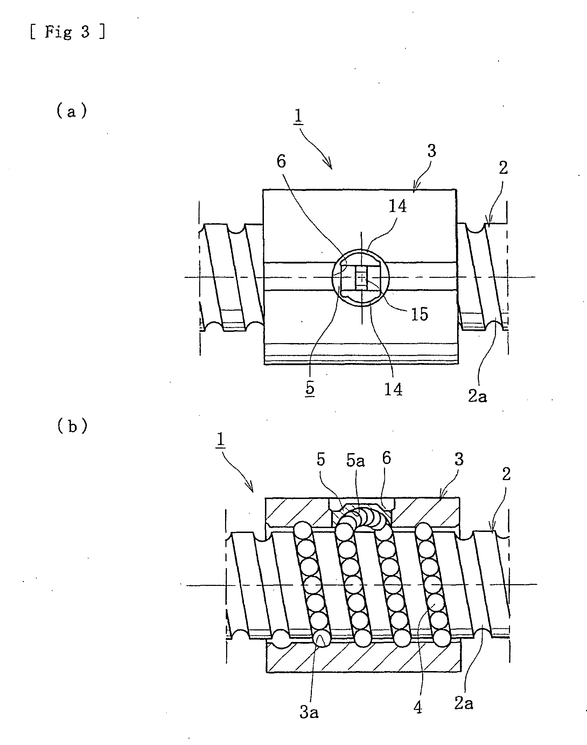

Fig. 1 is a partially enlarged cross-section view showing a condition of a bridge window of a nut into which a bridge member of the present invention is fitted; Fig. 2(a) is a partial view near the bridge member taken from a radially inward side of the nut; Fig. 2(b) is a cross-section view of the nut and the bridge member of the present invention; Fig. 3(a) is a plan view of the bridge type ball screw of the present invention; Fig. 3(b) is a longitudinal section view of the bridge type ball screw of Fig. 3(a).

As shown in Figs. 3(a) and 3(b), the bridge type ball screw 1 comprises a screw shaft 2 formed with a helical screw groove 2a on its outer circumference; a nut 3 formed with a helical screw groove 3a on its inner circumference and adapted to be fitted on the screw shaft 2; a large number of balls 4 contained in a rolling passage formed by oppositely arranged screw grooves 2a and 3a; and a bridge member 5 functioning as a circulating member for the balls 4.

A configuration of longitudinal section of each of the screw grooves 2a and 3a may be circular arc or Gothic arc configuration. In this embodiment the Gothic arc configuration is adopted from reasons that a large contacting angle relative to the ball 4 and a small axial gap can be ensured. This enables to increase rigidity against an axial load and to suppress generation of vibration of the bridge type ball screw.

As shown in Fig. 1 through Fig. 3, a substantially circular bridge window 6 to which the substantially cylindrical bridge member 5 is fitted is formed in a barrel of the cylindrical nut 3 so that bridge window 6 passes through the wall of the barrel and cuts a portion of the screw groove 3a. A connecting groove 5a for connecting mutually adjacent screw grooves 3a of the nut 3 by one round is formed in the bridge member 5. This connecting groove 5a is formed as having a S-shaped configuration so that it can smoothly connect the mutually adjacent screw grooves 3a of the nut 3. Inlet/outlet ports 5b and 5b at opposite ends of the connecting groove 5a open toward circumferentially opposite directions of the nut 3 each other and are connected to the adjacent screw grooves 3a and 3a. Thus the connecting groove 5a and the screw groove 3a of substantially one round form a rolling passage for the balls 4.

A large number of balls 4 contained between the screw grooves 2a and 3a in the ball rolling passage roll along the screw grooves 2a and 3a. The balls 4 are guided to the connecting groove 5a of the bridge member 5, climb over the screw ridge of the screw shaft 2 and return to the adjacent screw groove 3a, and roll again along the screw grooves 2a and 3a. The depth of the connecting groove 5a is set so that balls 4 can climb over the screw ridge of the screw shaft 2 within the connecting groove 5a.

A pair of arm portions 9 and 9 acting as projections for preventing fallout of the bridge member 5 are formed on ends of radially inner portion of the bridge member 5 by the side of the inlet/outlet ports 5b and 5b. The arm portions 9 and 9 are formed as cylindrical rods projecting in opposite directions each other beyond the outer diameter of the bridge member 5 and engaged with screw groove portions not connected to the inlet/outlet ports 5b and 5b via a predetermined radial gap. The bridge member 5 is axially positioned relative to the nut 3 and prevented from being fallen out from the bridge window 6 radially outward.

As shown in Fig. 1, a pair of guiding walls 13 and 13 are formed oppositely each other on the circumference of the bridge member 5 and the bridge member 5 is secured to the nut 3 by caulked portion 14 and 14 formed by plastically deforming the guiding walls 13 and 13 onto the edge portion of the bridge window 6 as shown in Fig. 2.
The guiding walls 13 and 13 stand radially outward from outsides of the recessed portions 12 and 12 and arranged at laterally either side of the axis of the nut 3 as shown in Fig. 1. The bridge member 5 is fitted into the bridge window 6 so that the arm portions 9 and 9 are engaged with the screw groove 3a of the nut 3 and then the guiding walls 13 and 13 are plastically deformed onto the edge portion 6a of the bridge window 6 by using a caulking tool (not shown) to form the caulked portions 14 and 14. Since the rattle of the bridge member 5 would be caused when an amount of spring back of the caulked portion 14 and 14 is large, the edge portion 6a of the bridge window 6 is formed as an inclined surface.

The bridge member 5 is made by injection molding sintered ally obtained by plastically refining metallic powder. For preparation of the injection molding, firstly, plastic and binder comprising wax are mixed and then granulated to pellets from the mixed material. The granulated pellets are fed to a hopper of an injection molding machine and injected into a mold under a melted condition to form the sintered alloy by the so-called "MIM" (Metal Injection Molding) method. The sintered alloy formed by MIM can be easily and exactly formed to the bridge member of desired configuration and dimension although the bridge member requires high difficulty in work and has a complicated configuration. It may be appreciated that the bridge member 5 can be made of any other sintered material.

It is preferable to set of the hardness of the bridge member within a range of 15-30 HRC in order to obtain both ability of caulking and wear resistance. It may be possible that whole the bridge member 5 is quenched as having said hardness range, however it should be noted that it is sufficient if at least caulking portions 14 and 14 of the bridge member 5 are included in said hardness range. The partial quenching of the caulking portions 14 and 14 may be performed e.g. by the high frequency induction quenching, however it is possible to reduce manufacturing cost if whole the bridge member 5 is hardened by the dipping quenching.

The bridge member 5 can be secured to the nut by caulking the guide walls 13 and 13 after the bridge member 5 has been inserted into the bridge window 6 from the inside of the nut 3 and the pair of arms 9 and 9 are contacted with the screw groove 3a of the nut 3. The inventors of the present invention have found that rattle of the bridge member caused by vibration load is drastically increased when the clearance C between the bridge member 5 and the bridge window 6 exceeds a predetermined value.

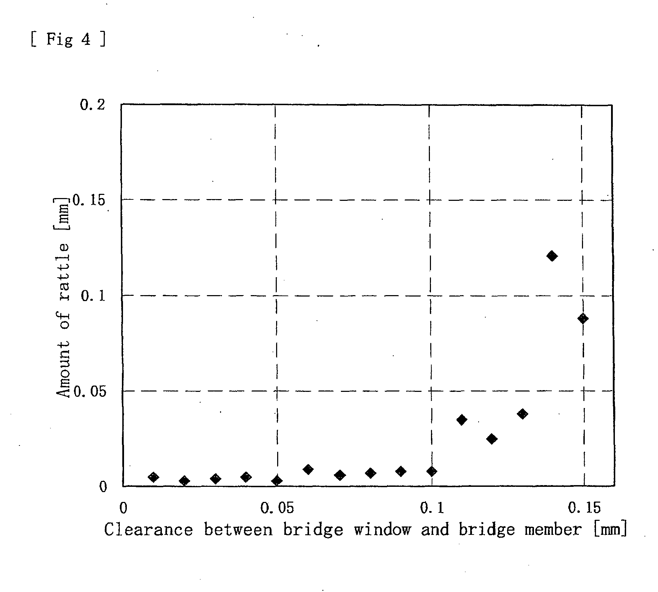

Fig. 4 is a graph showing results of measurement of the amount rattle (loose) of the caulked portions 14 and 14 after the vibration endurance test (test of applying a constant alternation load to the ball screw 1) has been performed. The loose of the caulked portions 14 and 14 was evaluated by measuring the amount of rattle of the bridge member 5 in the vertical direction (i.e. the radial direction of the nut 3, Fig. 1) with securing the nut 3.

As can be clearly understood from the graph of Fig. 4, the amount of the rattle of the bridge member 5 after the vibration endurance test is substantially constant in about 0.01 mm when the clearance C between the inner diameter of the bridge window 6 and the outer diameter of the bridge member 5 is 0.1 mm or less, however the amount of the rattle drastically increases to about 0.04 mm when the clearance C exceeds 0.1 mm. On the contrary, if the clearance C is set negative, pressing operation is required to fit the bridge member 5 into the bridge window 6 and thus easiness of assembly is extremely reduced.
Accordingly it is preferable to set the clearance C as 0 mm≤C≤0.1 mm. This makes it possible to suppress the increase of the amount of the rattle of the bridge member 5 after the vibration endurance test.

Since the guiding walls 13 and 13 (i.e. the caulking portion 14 and 14) are arranged in circumferential direction of the nut 3 similarly to that of the arms 9 and 9, the clearance C measured is also a clearance in the circumferential direction.

In addition since the bridge window 6 is formed as having a substantially circular configuration and the bridge member 5 is formed as having a substantially cylindrical configuration corresponding to the configuration of the bridge window 6, it is possible to reduce manufacturing steps of the bridge window and accordingly the manufacturing cost as well as to easily and accurately position the bridge member relative to the nut in the axial direction and accordingly to improve the reliability of the ball screw. However the bridge window 6 and the bridge member 5 may be other configuration such as an oval or square configuration.
Although it is described an example in which the bridge member is secured by caulking, the securing form is not limited to the caulking and any other form may be used.

The present invention has been described with reference to the preferred embodiment. Obviously, modifications and alternations will occur to those of ordinary skill in the art upon reading and understanding the preceding detailed description. It is intended that the present invention be construed as including all such alternations and modifications insofar as they come within the scope of the appended claims or the equivalents thereof.

### Applicability in industry

The bridge type ball screw of the present invention can be applied to a bridge type ball screw for example used in an electric-powered actuator of an automobile.

### Brief Description of the Drawings

[Fig. 1] A partially enlarged cross-section view showing a condition of a bridge window of a nut into which a bridge member of the present invention is fitted;
[Fig. 2(a)] A partial view near the bridge member taken from a radially inward side of the nut;
[Fig. 2(b)] A cross-section view of the nut and the bridge member of the present invention;
[Fig. 3(a)] A plan view of the bridge type ball screw of the present invention;
[Fig. 3(b)] A longitudinal section view of the bridge type ball screw of Fig. 3(a); and
[Fig. 4] A graph showing a relation between a clearance between the bridge member and the bridge window after the vibration endurance test and an amount of rattle of the bridge member.

### Explanation of Reference Numerals

- 1: ball screw
- 2: screw shaft
- 2a, 3a: screw groove
- 3: nut
- 4: ball
- 5: bridge member
- 5a: connecting groove
- 5b: inlet/outlet port
- 6: bridge window
- 6a: edge portion
- 9: arm portion (projection for preventing fallout of bridge member)
- 11: head portion
- 12: recessed portion
- 13: guiding wall
- 14: caulking (caulked) portion
- 15: rib
- C: clearance (gap between bridge member and bridge window)

## Claims

1. A bridge type ball screw (1) comprising a screw shaft (2) formed on its outer circumference with a helical screw groove (2a), a nut (3) formed on its inner circumference with a helical screw groove (3a) and adapted to be fitted on the screw shaft (2), a plurality of balls (4) contained in a ball rolling passage formed by the opposite screw grooves (2a and 3a), and a metallic bridge member (5) formed with a connecting groove (5a) for connecting adjacent portions of the ball rolling passage to make the rolling passage a ball circulating passage and fitted in a bridge window (6) formed in a barrel of the nut (3), **characterized in that**
a clearance (C) between the bridge member (5) and the bridge window (6) is set as 0 mm < C ≤ 0.1 mm.

2. A bridge type ball screw (1) of claim 1 wherein the bridge window (6) and the bridge member (5) are formed as having a substantially circular configuration.

3. A bridge type ball screw (1) of claim 1 or 2 wherein the bridge member (5) is formed of MIM or sintered material.

4. A bridge type ball screw (1) of any one of claims 1 through 3 wherein at least the caulking portion (14) of the bridge member (5) has the hardness of 15-30 HRC.

5. A bridge type ball screw (1) of claim 4 wherein whole the bridge member (5) has the hardness of 15-30 HRC.

6. A bridge type ball screw (1) of any one of claims 1 through 5 wherein the bridge member (5) is formed with a pair of arms (9 and 9) adapted to be engaged with the screw groove (3a) of the nut (3).

7. A bridge type ball screw (1) of any one of claims 1 through 6 wherein the caulking portions (14) are formed on the diametrically outer ends of the bridge member (5) and adapted to be engaged with an open edge (6a) of the bridge window (6).

## Patentansprüche

1. Brückenartige Kugelgewindespindel (1), umfassend eine Spindelwelle (2), die an ihrem Außenumfang mit einer spiralförmigen Gewindenut (2a) ausgebildet ist, eine Mutter (3), die an ihrem Innenumfang mit einer spiralförmigen Gewindenut (3a) ausgebildet und zum Anbringen auf der spiralförmigen Gewindenut (2a) geeignet ist, mehrere Kugeln (4), die in einem Kugeldurchlauf enthalten sind, welcher durch die gegenüberliegenden Gewindenute (2a und 3a) ausgebildet ist, und ein metallisches Brückenglied (5), das mit einer Verbindungsnut (5a) zum Verbinden benachbarter Abschnitte des Kugeldurchlaufs ausgebildet ist, um aus dem Kugeldurchlauf einen Kugelumlauf herzustellen, und in einem Brückenfenster (6) angebracht ist, welches in einem Lauf der Mutter (3) ausgebildet ist, **dadurch gekennzeichnet, dass** ein Freiraum (C) zwischen dem Brückenglied (5) und dem Brückenfenster (6) auf 0 mm < C ≤0,1 mm eingerichtet ist.

2. Brückenartige Kugelgewindespindel (1) nach Anspruch 1, wobei das Brückenfenster (6) und das Brückenglied (5) derart ausgebildet sind, dass sie eine im Wesentlichen kreisförmige Konfiguration aufweisen.

3. Brückenartige Kugelgewindespindel (1) nach Anspruch 1 oder 2, wobei das Brückenglied (5) aus MIM- oder gesintertem Material ausgebildet ist.

4. Brückenartige Kugelgewindespindel (1) nach einem der Ansprüche 1 bis 3, wobei zumindest der Verstemmabschnitt (14) des Brückenglieds (5) die Härte von 15 bis 30 HRC aufweist.

5. Brückenartige Kugelgewindespindel (1) nach Anspruch 4, wobei das gesamte Brückenglied (5) die Härte von 15 bis 30 HRC aufweist.

6. Brückenartige Kugelgewindespindel (1) nach einem der Ansprüche 1 bis 5, wobei das Brückenglied (5) mit einem Paar Armen (9 und 9) ausgebildet ist, die dazu geeignet sind, mit der Gewindenut (3a) der Mutter (3) in Eingriff gebracht zu sein.

7. Brückenartige Kugelgewindespindel (1) nach einem der Ansprüche 1 bis 6, wobei die Verstemmabschnitte (14) an den diametral äußeren Enden des Brückenglieds (5) ausgebildet sind und dazu geeignet sind, mit einer offenen Kante (6a) des Brückenfensters (6) in Eingriff gebracht zu sein.

## Revendications

1. Vis à billes de type pont (1) comprenant un axe de vissage (2) présentant sur sa circonférence extérieure, d'une rainure hélicoïdale (2a), un boulon (3), présentant sur sa surface intérieure, une rainure hélicoïdale (3a) et adaptée à l'axe de vissage (2), une série de billes (4), présentes dans un passage de roulement des billes formé par les rainures opposées (2a, 3a), un élément de pont métallique (5) constitué d'une rainure de connexion (5a) pour connecter les parties adjacentes du passage de roulement des billes de manière à former un passage pour la circulation des billes, et emboîté dans une fenêtre de pont (6) formée dans un barreau de l'écrou (3), **caractérisée en ce que** la clairance (C) entre l'élément de pont (5) et la fenêtre de pont (6) est réglée de telle sorte que 0 mm < C ≤ 0,1 mm.

2. Vis à billes de type pont (1) selon la revendication 1, où la fenêtre de pont (6) et l'élément de pont (5) sont formés de manière à avoir une configuration sensiblement circulaire.

3. Vis à billes de type pont (1) selon la revendication 1 ou 2, où l'élément de pont (5) est composé de MIM ou d'un matériau fritté.

4. Vis à billes de type pont (1) selon l'une quelconque des revendications 1 à 3, où au moins la partie d'engagement (14) à déformation plastique l'élément de pont (5) a une dureté de 15-30 HRC.

5. Vis à billes de type pont (1) selon la revendication 4, où tout l'élément de pont (5) a une dureté de 15-30 HRC.

6. Vis à billes de type pont (1) selon l'une quelconque des revendications 1 à 5, où l'élément de pont (5) est formé avec une paire de bras (9 et 9) destinés à s'engager avec la rainure de vissage (3a) du boulon (3).

7. Vis à billes de type pont (1) selon l'une quelconque des revendications 1 à 6, où les parties d'engagement (14) sont formées sur les extrémités diamétralement extérieures de l'élément de pont (5) et sont destinées à s'engager avec un bord ouvert (6a) de la fenêtre de pont (6).
